# EUROPÄISCHE PATENTSCHRIFT

(11) **EP 1 834 755 B1**
(45) Veröffentlichungstag und Bekanntmachung des Hinweises auf die Patenterteilung: **11.06.2008**
(21) Anmeldenummer: 06005467.3
(22) Anmeldetag: 17.03.2006
(51) Int. Cl.: B29C 65/78, B29C 65/20

(54) **Verfahren und Vorrichtung zum lage- und winkelkompensierten Schweissen**
Welding method and apparatus for compensation of position and angle
Procédé et dispositif de soudage pour compenser la position et l'angle

(43) Veröffentlichungstag der Anmeldung: 19.09.2007
(73) Patentinhaber: Oxenfarth, Hans, 58256 Ennepetal (DE)
(72) Erfinder: Oxenfarth, Hans, 58256 Ennepetal (DE)
(74) Vertreter: Dörner, Lothar

(56) Entgegenhaltungen:
- EP-A2- 1 110 702
- JP-A- 2003 011 229
- US-A1- 2002 062 161

## Beschreibung

Die Erfindung betrifft ein Verfahren sowie eine Vorrichtung zum lage- und winkelkompensierten Schweißen eines Bauteils an einen Grundkörper, insbesondere an einen Hohlblaskörper.

An extrusionsgeblasenen Hohlkörpern wie beispielsweise Kraftstofftanks werden Applikationsteile, wie beispielsweise Befüllstützen, Be- und Entlüftungsventile oder Befestigungselemente durch unterschiedliche Schweißverfahren befestigt. In dem meisten Fällen kommt hier das Heizelementschweißen zum Einsatz.

Beim Heizelementschweißverfahren werden die Verbindungsflächen der zu verschweißenden Komponenten mit einem Heizelement direkt (Kontakterwärmung) oder indirekt (Strahlungserwärmung) plastifiziert und unter Druck miteinander verschweißt. Der Schweißprozess gliedert sich dabei auf in die wesentlichen Verfahrensschritte Anwärmen (plastifizieren der Fügefläche), Umstellen (entfernen des Heizelementes aus dem Arbeitsbereich) und Fügen (Schweißen der plastifizierten Fügeflächen unter Anpressdruck).

In der Mehrzahl der Anwendungsfälle kommt das direkte Schweißverfahren (Kontakterwärmung) zum Einsatz **(vergleiche beispielsweise** EP 1110 702 A2**).** Bei diesem Verfahren haben die Fügeflächen einen direkten Kontakt mit dem Heizelement. Die miteinander zu verschweißenden Komponenten sollten nach Möglichkeit aus dem gleichen Kunststofftyp bestehen; das Verschweißen unterschiedlicher Kunststoffe ist unter bestimmten Bedingungen ebenfalls möglich. Je nach Kunststoffart kann es vorkommen, dass die Schmelze am Heizelement "festklebt". In diesen Fällen werden die Heizelemente sinnvoller Weise mit Antihaftbeschichtungen versehen.

Insbesondere beim Verschweißen von Kunststoffen, deren Schmelze trotz Antihaftbeschichtung am Heizelement ankleben, oder die eine höhere Anwärmtemperatur (< 270° C) erfordert, als es die Antihaftbeschichtung zulässt, kommen berührungslose Verfahren zum Einsatz. Dabei werden die Fügeflächen der Schweißkomponenten plastifiziert, indem zwischen Fügefläche und Heizelement ein Abstand von ca. 0,5 bis 1,0 mm verbleibt. Die Heizelementtemperatur beträgt in diesem Fall etwa 400° C bis 600° C, abhängig von dem verwendeten Kunststoff. Um eine gleichmäßige Plastifizierung der Fügeflächen zu erreichen, ist es erforderlich, dass der Abstand zwischen Fügefläche und Heizelement über die gesamte Schweißfläche gleich ist. Dementsprechend eignet sich dieses Verfahren nur für Kunststoffteile, die in einem engen Toleranzbereich gefertigt werden können.

Zum Ausgleich von Unebenheiten und Toleranzen der Fügeflächen können diese mit einer definierten Kraft so lange gegen das Heizelement gedrückt werden, bis die gesamte Fläche planparallel anliegt. Der Angleichweg muss demzufolge größer sein als die Summe der Toleranzen der Fügefläche und des Heizelementes. Mit dem Erreichen des Anwärmweges durch Erreichen eines mechanischen Anschlags oder nach Ablauf einer eingestellten Angleichzeit ist der Angleichvorgang abgeschlossen. Gleichzeitig wird die Anwärmkraft reduziert, damit kein plastifiziertes Material mehr aus der Fügezone verdrängt wird. Die Möglichkeit eines Angleichprozesses ist jedoch durch die Materialstärke des zu schweißenden Körpers begrenzt. Insbesondere bei extrusionsgeblasenen Hohlkörpern wie Kraftstofftanks liegt eine sehr geringe Materialstärke vor, was den Einsatz von Angleichprozessen erschwert.

Eine weitere Problematik stellt sich durch größere Winkelabweichungen zwischen den Fügeflächen der miteinander zu verschweißenden Bauteile. Schweißsysteme mit statischen Schweißteilaufnahmen und Heizelementen können sich nicht bei jedem Schweißvorgang der Winkellage der Fügeflächen anpassen und sind demzufolge nur dort einsetzbar, wo keine größeren Winkelabweichungen der Fügeflächen zu erwarten sind. Es wurden Schweißsysteme mit selbstjustierenden Schweißteilaufnahmen und Heizelementen entwickelt, die sich durch eine spezielle sphärische Lagerung ohne wesentlichen Versatz der xy-Koordinaten der Fügefläche des Fügepartners anpassen (vergleiche beispielsweise JP 2003 011229).

Unabhängig von dem eingesetzten Heizelement muss auf Grund der großen Toleranzschwankungen insbesondere bei Hohlkörpern bei jedem Artikel mit einer unterschiedlichen Position der Schweißfläche gerechnet werden. Schweißsysteme mit statischer Wegbegrenzung erweisen sich hier als ungeeignet. Dieses resultiert daraus, dass in dem einen Fall zu viel und beim nächsten zu wenig Material plastifiziert wird. Ähnliche Probleme treten auch bei ausschließlich druckgesteuerten Schweißsystemen auf, da auf Grund der unterschiedlichen Federwirkung der Behälterwand im Schweißbereich die resultierenden Kräfte und somit die Plastifizierungsverteilung bei jedem Schweißvorgang unterschiedlich sein können.

Hier will die Erfindung Abhilfe schaffen. Der Erfindung liegt die Aufgabe zu Grunde, ein Verfahren zum lage- und winkelkompensierten Schweißen zu schaffen, welches auch bei großen Lage- und Winkeltoleranzen der zu schweißenden Fügeflächen eine gleichmäßige Plastifizierung der Fügeflächen ermöglicht. Gemäß der Erfindung wird diese Aufgabe durch die Merkmale des Patentanspruchs 1 gelöst.

Mit der Erfindung ist ein Verfahren zum lage- und winkelkompensierten Schweißen geschaffen, welches auch bei großen Lage- und Winkeltoleranzen der zu schweißenden Fügeflächen eine gleichmäßige Plastifizierung der Fügeflächen ermöglicht.

Der Begriff "Heizelement" wird hier stellvertretend für alle geeigneten Mittel zur Plastifizierung der Fügeflächen verwendet, beispielsweise auch solche Mittel, die beim Rückschweißen oder beim Ultraschallschweißen Anwendung finden. Derartige Mittel sind somit unter dem Begriff "Heizelement" im Sinne der Erfindung zu subsumieren.

In Weiterbildung der Erfindung erfolgt die Erfassung der Geometrie- und Lagedaten durch berührungsloses Abtasten (Scannen). Hierdurch ist ein zeitnahes und verschleißfreies Erfassen der Geometrie- und Lagedaten ermöglicht.

In Ausgestaltung der Erfindung werden die Geometrie- und Lagedaten des gesamten Grundkörpers und seiner Fügeflächen vermessen. Hierdurch ist auch bei mehreren erforderlichen Schweißgängen an ein und dem selben Grundkörper nur eine Erfassung der Geometrie- und Lagedaten erforderlich. Darüber hinaus können die Messdaten im Rahmen der Qualitätssicherung der zu Grunde liegenden Grundkörper verwendet werden.

Bevorzugt erfolgt zusätzlich eine dreidimensionale Erfassung der Geometrie- und Lagedaten der Fügefläche des Bauteils, derart, dass zwischen Heizelement und Fügefläche des Bauteils ein gleicher Abstand über die Fügefläche erzielt wird. Hierdurch ist eine optimale Zuführung der Fügefläche des Bauteils an die Fügefläche des Grundkörpers ermöglicht.

Bevorzugt erfolgt die Positionierung des Bauteils relativ zu mindestens einem Heizelement auf Basis der erfassten Geometrie- und Lagedaten. Hierdurch wird eine gleichmäßige Schmelzschicht auf der Fügefläche des Bauteils erzielt.

In weiterer Ausgestaltung der Erfindung werden auf Basis der erfassten Geometrie- und Lagedaten zusätzliche Bearbeitungsschritte am Grundkörper vorgenommen. Hierdurch ist eine in Lage und Winkel korrekte Zuführung von Bearbeitungswerkzeugen ermöglicht. Dieses betrifft insbesondere solche Bearbeitungsoperationen, die eine parallele Ausrichtung zur Bearbeitungsfläche erfordern, wie beispielsweise das Einbringen (Schneiden, Fräsen etc.) von Öffnungen in den Grundkörper oder dessen Beschriftung mittels Laser.

Der vorliegenden Erfindung liegt weiterhin die Aufgabe zu Grunde, eine Vorrichtung zum lage- und winkelkompensierten Schweißen bereit zu stellen, die auch bei großen Toleranzschwankungen der zu schweißenden Fügeflächen eine gleichmäßige Plastifizierung der Fügeflächen ermöglicht. Gemäß der Erfindung wird diese Aufgabe durch die Merkmale des Patentanspruchs 7 gelöst.

Mit der Erfindung ist eine Vorrichtung zum lage- und winkelkompensierten Schweißen geschaffen, die auch bei großen Toleranzschwankungen der zu schweißenden Fügeflächen eine gleichmäßige Plastifizierung der Fügeflächen ermöglicht.

In Weiterbildung der Erfindung wirken die Mittel zur Positionierung des Grundkörpers und die Mittel zur Positionierung des Bauteils gesteuert durch die Steuereinheit derart zusammen, dass beim Zusammenfügen von Grundkörper und Bauteil auf Basis der Geometrie- und Lagedaten ein über die Fügeflächen gleichmäßiger Anpressdruck erzielbar ist. Hierdurch ist eine hochwertige Schweißverbindung auch bei dünnwandigen, Hohlkörpern mit federnden Wänden gewährleistet.

In Ausgestaltung der Erfindung ist wenigstens ein Mittel zur Positionierung des Heizelementes ein Mehrachsenroboter. Hierdurch ist ein hoher Durchsatz an Schweißvorgängen verbunden mit einer hohen Prozessgenauigkeit ermöglicht.

Vorteilhaft ist das Mittel zur Erfassung von Geometrie- und Lagedaten ein lasergestützter 3-D-Scanner. Hierdurch ist ein schnelles und verschleißfreies Erfassen der Geometrie- und Lagedaten ermöglicht. Alternativ sind auch andere 3D-Messsysteme einsetzbar.

Bevorzugt sind zusätzlich Mittel zur Bearbeitung des Grundkörpers vorgesehen, welche über die Steuereinheit auf Basis der erfassten Geometrie- und Lagedaten ansteuerbar sind. Hierdurch ist eine zeitnahe Bearbeitung des Grundkörpers einschließlich der Bearbeitung der Fügeflächen ermöglicht.

In weiterer Ausgestaltung sind Heizelemente und das Mittel zur Erfassung von Geometrie- und Lagedaten in einer Handhabungseinheit kombiniert. Hierdurch ist ein zügiger Prozessablauf ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Fig. 1: Die schematische Darstellung einer Vorrichtung zum lage- und winkelkompensierten Schweißen und
- Fig. 2: die schematische Darstellung einer kombinierten Handhabungseinheit.

Die als Ausführungsbeispiel gewählte Vorrichtung zum Heizelementschweißen umfasst im Wesentlichen zwei Roboter 1, 2, einen Werkstückträger 3 sowie eine Steuereinheit 4. Anstelle der Roboter 1, 2 sind auch andere steuerbare Positioniersysteme einsetzbar. Der Roboter 1 ist mit einem Werkzeugwechselsystem 11 zur Aufnahme einer Effektoreinheit 12 ausgestattet. Die Effektoreinheit 12 ist mit einem Laserdistanzmesser 121 versehen.

Der Roboter 2 ist ebenfalls mit einem Werkzeugwechselsystem 21 ausgestattet, dass eine Effektoreinheit 22 aufnimmt. Die Effektoreinheit 22 ist mit einem Heizelement 221 und mit einer Aufnahme für ein zu fixierendes Bauteil 6 versehen.

Die Roboter 1, 2 sind mit einer gemeinsamen Steuereinheit 4 verbunden.

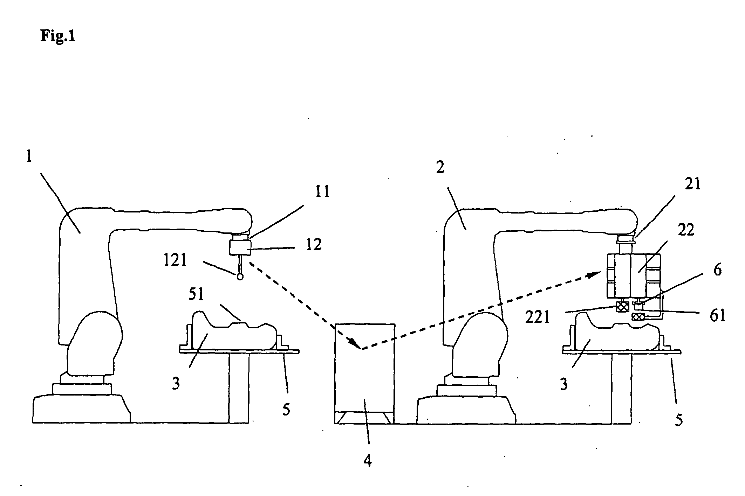

Zum Verschweißen eines Bauteils 6 an einen Grundkörper 5 wird der Grundkörper 5 zunächst auf einer Werkstückaufnahme 3 fixiert. Anschließend erfolgt eine dreidimensionale Erfassung der Geometrie- und Lagedaten der Fügefläche 51 des Grundkörpers 5 durch den Laserdistanzmesser 121. Hierbei wird der Effektor 12 mittels des Roboters 1, gesteuert durch Steuereinheit 4 über den Grundkörper 5 geführt. Die erfassten Geometrie- und Lagedaten werden an die Steuereinheit 4 übertragen. (Der Datenfluss ist in Fig. 1 durch gestrichelte Pfeile dargestellt.) Basierend auf den Geometrie- und Lagedaten der Fügefläche 51 des Grundkörpers 5 wird der Roboter 2 von der Steuereinheit 4 derart angesteuert, dass die Effektoreinheit 22 mit dem an dieser angeordneten Heizelement 221 in einem definierten Abstand vor die Fügefläche 51 des Grundkörpers 5 positioniert wird. Die Positionierung des Heizelements 221 erfolgt auf Basis der erfassten Geometrie- und Lagedaten derart, dass der Abstand zwischen Heizelement 221 und Fügefläche 51 des Grundkörpers 5 über die gesamte Fügefläche 51 gleich ist. Zur gleichen Zeit erfolgt die Erwärmung der Fügefläche 61 des Bauteils 6 über ein - nicht dargestelltes - weiteres Heizelement. Nach Erwärmung der Fügeflächen 51, 61 von Grundelement 5 und Bauteil 6 wird die Effektoreinheit 22 über den Roboter 2 aus dem Arbeitsbereich herausgefahren. Anschließend wird das Bauteil 6 nach einem Werkzeugwechsel mittels der Effektoreinheit 22* derart auf dem Grundkörper 5 positioniert, dass die Fügeflächen 51, 61 von Grundkörper 5 und Bauteil 6 exakt aufeinander liegen und über die gesamte Fügefläche 51, 61 mit einem gleichmäßigen Anpressdruck beaufschlagt werden.

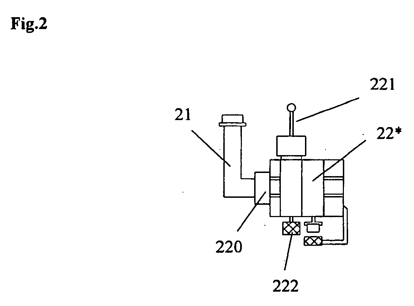

In einer vorteilhaften Ausführungsform gemäß Figur 2 wird eine kombinierte Effektoreinheit 22* eingesetzt. Die kombinierte Effektoreinheit 22* ist über ein drehbares Zwischenstück 220 mit dem Werkzeugwechselsystem 21 des Roboters 2 verbunden. Die Effektoreinheit 22* ist sowohl mit einem 3D-Messsystem 222, als auch mit einem Heizelement 221 ausgestattet, so dass zwischen den Prozessschritten der Erfassung der Geometrie- und Lagedaten der Fügefläche des Grundkörpers und der Erwärmung der Fügefläche des Grundelements kein Werkzeugwechsel erfolgen muss. Im Ausführungsbeispiel kommt innerhalb des 3D-Messsystems ein Laserdistanzmesser zum Einsatz. Alternativ ist auch der Einsatz eines anderen berührungslosen Systems (beispielsweise Ultraschallmessung) oder auch eines taktilen Messsystems möglich. Durch die Effektoreinheit 22* sind die zuvor genannten Prozessschritte mit nur einem Roboter 2 durchführbar.

Weiterhin kann ein Effektor mit einem Bearbeitungswerkzeug, beispielsweise einem Kreisschneider, vorgesehen sein, um auf Basis der erfassten Geometrie- und Lagedaten vorbereiteten Bearbeitungen des Grundkörpers 5 vorzunehmen. Eine solche Bearbeitung kann beispielsweise in der Einbringung einer (kreisrunden) Ausnehmung in einen als Hohlblaskörper ausgeführten Kraftstofftank vor dem Anschweißen eines Einfüllstutzens bestehen. Es ist auch denkbar, das Bearbeitungswerkzeug ebenfalls in der kombinierten Effektoreinheit gemäß Figur 2 vorzusehen.

## Patentansprüche

1. Verfahren zum lage- und winkelkompensierten Schweißen eines Bauteils (6) mit einer Fügefläche (61) an einen Grundkörper (5) mit wenigstens einer Fügefläche (51), insbesondere an einen Hohlblaskörper, umfassend folgende Arbeitsschritte:
- dreidimensionale Erfassung der Geometrie- und Lagedaten der zu schweißenden Fügefläche (51) des Grundkörpers (5),
- Positionierung wenigstens eines Heizelementes (221) auf Basis der erfassten Geometrie- und Lagedaten, derart, dass ein zwischen Heizelement (221) und Fügefläche (51) des Grundkörpers (5) ein gleicher Abstand über die gesamte Fügefläche (51) erzielt wird,
- Plastifizierung der Fügeflächen (51, 61) von Grundkörper (5) und Bauteil (6),
- Zusammenführen der plastifizierten Fügeflächen (51, 61) von Bauteil (6) und Grundkörper (5).

2. Verfahren nach Anspruch 1, **dadurch gekennzeichnet, dass** die Erfassung der Geometrie- und Lagedaten durch berührungsloses Abtasten (Scannen) erfolgt.

3. Verfahren nach einem der vorgenannten Ansprüche, **dadurch gekennzeichnet, dass** die Geometrie- und Lagedaten des gesamten Grundkörpers (5) und seiner Fügeflächen (51) vermessen werden.

4. Verfahren nach einem der vorgenannten Ansprüche, **dadurch gekennzeichnet, dass** zusätzlich eine dreidimensionale Erfassung der Geometrie- und Lagedaten der Fügefläche (61) des Bauteils (6) erfolgt.

5. Verfahren nach Anspruch 4, **dadurch gekennzeichnet, dass** die Positionierung des Bauteils (6) relativ zu mindestens einem Heizelement auf Basis der erfassten Geometrie- und Lagedaten erfolgt, derart, dass zwischen Heizelement und Fügefläche (61) des Bauteils (6) ein gleicher Abstand über die Fügefläche (61) erzielt wird.

6. Verfahren nach einem der vorgenannten Ansprüche, **dadurch gekennzeichnet, dass** auf Basis der erfassten Geometrie- und Lagedaten zusätzliche Bearbeitungsschritte am Grundkörper (5) vorgenommen werden.

7. Vorrichtung zur Durchführung eines Verfahrens nach einem der Ansprüche 1 bis 6, umfassend wenigstens ein Heizelement (221) sowie Mittel zur Positionierung (2) des wenigstens einen Heizelements (221), Mittel (3) zur Positionierung des Grundkörpers (5), Mittel (2) zur Positionierung des Bauteils (6), sowie eine Steuereinheit (4), **dadurch gekennzeichnet, dass Mittel (23) zur Erfassung von Geometrie- und Lagedaten eines Körpers (5) angeordnet sind, wobei** die Mittel (2) zur Positionierung des wenigstens einen Heizelements (221), die Mittel (3) zur Positionierung des Grundkörpers (5) und die Mittel (2) zur Positionierung des Bauteils (6) gesteuert durch die Steuereinheit (4) derart zusammenwirken, dass auf Basis der Geometrie- und Lagedaten zwischen dem wenigstens einen Heizelement (221) und der Fügefläche (51) des Grundkörpers (5) über die gesamte Fügefläche (51) ein gleichmäßiger Abstand erzielbar ist.

8. Vorrichtung nach Anspruch 7, **dadurch gekennzeichnet, dass** die Mittel (3) zur Positionierung des Grundkörpers (5) und die Mittel (2) zur Positionierung des Bauteils (6) gesteuert durch die Steuereinheit (4) derart zusammenwirken, dass beim Zusammenfügen von Grundkörper (5) und Bauteil (6) auf Basis der Geometrie- und Lagedaten ein über die Fügeflächen (51, 61) gleichmäßiger Anpressdruck erzielbar ist.

9. Vorrichtung nach einem der Ansprüche 7 und 8, **dadurch gekennzeichnet, dass** wenigstens ein Mittel (1) zur Positionierung eines Heizelements (221) ein Mehrachsenroboter ist.

10. Vorrichtung nach einem der Ansprüche 7 bis 9, **dadurch gekennzeichnet, dass** das Mittel (121) zur Erfassung von Geometrie- und Lagedaten ein lasergestützter 3D-Scanner ist.

11. Vorrichtung nach einem der Ansprüche 7 bis 10, **dadurch gekennzeichnet, dass** zusätzlich Mittel zur Bearbeitung des Grundkörpers (5) vorgesehen sind, welche über die Steuereinheit (4) auf Basis der erfassten Geometrie- und Lagedaten ansteuerbar sind.

12. Vorrichtung nach einem der Ansprüche 7 bis 11, **dadurch gekennzeichnet, dass** Heizelement (221) und Mittel (223) zur Erfassung von Geometrie- und Lagedaten in einer Effektoreinheit (22*) kombiniert sind.

## Claims

1. Process for position and angle-compensated welding of a component (6) with a joining surface (61) to a base body (5) with at least one joining surface (51), in particular to a hollow blown body comprising the following steps:
- three-dimensional measurement of the geometrical and position data of the joining surface (51) of the base body (5),
- positioning of at least one heating element (221) on the basis of the measured geometrical and position data, in such a way that an equal distance is achieved between the heating element (221) and the joining surface (51) of the base body (5) over the entire joining surface (51),
- melting of the joining surfaces (51, 61) of base body (5) and component (6),
- joining of the melted joining surfaces (51, 61) of component (6) and base body (5).

2. Process according to claim 1, **characterised in that** the geometrical and position data are measured by non-contact palpation (scanning).

3. Process according to one of the above claims, **characterised in that** the geometrical and position data of the entire base body (5) and its joining surfaces (51) are measured.

4. Process according to one of the above claims, **characterised in that** the geometrical and position data of the joining surface (61) of the component (6) are also measured in three dimensions.

5. Process according to claim 4, **characterised in that** the positioning of the component (6) in relation to at least one heating element is based on the measured geometrical and position data, in such a way that an equal distance is achieved between the heating element and the joining surface (61) of the component (6) over the entire joining surface (61).

6. Process according to one of the above claims, **characterised in that** additional machining operations are carried out on the base body (5) on the basis of the measured geometrical and position data.

7. Device for executing a process according to one of the claims 1 to 6 comprising at least one heating element (221) and means of positioning (2) this (or these) heating element(s) (221), means (3) of positioning the base body (5), means (2) for positioning the component (6), and a control unit (4), **characterised in that** means (23) for measuring the geometrical and position data of a body (5) are provided, where the means (2) for positioning at least one heating element (221), the means (3) of positioning the base body (5), and the means (2) for positioning the component (6), are controlled by the control unit (4) and interact in such a way that, on the basis of the geometrical and position data, an even distance can be achieved between the heating element(s) (221) and the joining surface (51) of the base body (5) over the entire joining surface (51).

8. Device according to claim 7 **characterised in that** the means (3) of positioning the base body (5) and the means (2) for positioning the component (6), are controlled by the control unit (4) and interact in such a way that, when the base body (5) and the component (6) are joined on the basis of the geometrical and position data, an even application pressure is achieved over the joining surfaces (51, 61).

9. Device according to one of the claims 7 and 8 **characterised in that** at least one means (1) for positioning a heating element (221) is a multi-axis robot.

10. Device according to one of the claims 7 to 9 **characterised in that** the means (121) for measuring the geometrical and position data is a laser-assisted 3D scanner.

11. Device according to one of the claims 7 to 10 **characterised in that** additional means for machining the base body (5) are provided, which are controlled by the control unit (4) on the basis of the measured geometrical and position data.

12. Device according to one of the claims 7 to 11 **characterised in that** the heating element (221) and the means (223) for measuring the geometrical and position data are combined in an effector unit (22*).

## Revendications

1. Procédé de soudage, compensé en position et en angle, d'une pièce (6) présentant une surface jointive (61), contre un corps de base (5) présentant au moins une surface jointive (51), notamment contre un corps soufflé creux, assorti globalement des étapes de travail suivantes :
- Saisie tridimensionnelle des données géométriques et de position de la surface jointive (51) à souder du corps de base (5),
- Positionnement d'au moins un élément chauffant (221) sur la base des données géométriques et de position saisies, de sorte à obtenir, entre l'élément chauffant (221) et la surface jointive (51) du corps de base (5) un écart identique au-dessus de l'ensemble de la surface jointive (51),
- Plastification des surfaces jointives (51, 61) du corps de base (5) et de la pièce (6),
- Jonction des surfaces jointives plastifiées (51, 61) de la pièce (6) et du corps de base (5).

2. Procédé selon la revendication 1, **caractérisé en ce que** la saisie des données géométriques et de position a lieu par palpage sans contact physique (scannérisation).

3. Procédé selon l'une des revendications précédentes, **caractérisé en ce que** les données géométriques et de position de l'ensemble du corps de base (5) et de ses surfaces jointives (51) s'obtiennent par mesurage.

4. Procédé selon l'une des revendications précédentes, **caractérisé en ce qu'en** plus a lieu une saisie tridimensionnelle des données géométriques et de position de la surface jointive (61) de la pièce (6).

5. Procédé selon la revendication 4, **caractérisé en ce que** le positionnement de la pièce (6) relativement à au moins un élément chauffant a lieu sur la base des données géométriques et de position saisies, de sorte que l'écart entre l'élément chauffant et la surface jointive (61) de la pièce (6) soit identique au-dessus de toute la surface jointive (61).

6. Procédé selon l'une des revendications précédentes, **caractérisé en ce que** sur la base des données géométriques et de position saisies, des étapes d'usinage supplémentaires ont lieu sur le corps de base (5).

7. Dispositif servant à réaliser un procédé selon l'une des revendications 1 à 6, comprenant au moins un élément chauffant (221) ainsi que des moyens permettant de positionner (2) au moins cet élément chauffant (221), un moyen (3) permettant de positionner le corps de base (5), un moyen (2) permettant de positionner la pièce (6) ainsi qu'une unité de commande (4), **caractérisé en ce que sont agencés des moyens (23) permettant de saisir les données géométriques et de position d'un corps (5), sachant** que, pilotés par l'unité de commande (4), les moyens (2) servant à positionner au moins cet élément chauffant (221), les moyens (3) servant à positionner le corps de base (5) et les moyens (2) servant à positionner la pièce (6) interagissent de sorte qu'il est possible, sur la base des données géométriques et de position, d'obtenir un écart constant au-dessus de toute la surface jointive (51), entre au moins cet élément chauffant (221) et la surface jointive (51) du corps de base (5).

8. Dispositif selon la revendication 7, **caractérisé en ce que,** pilotés par l'unité de commande (4), les moyens (3) servant à positionner le corps de base (5) et les moyens (2) servant à positionner la pièce (6) interagissent de sorte que lors de l'assemblage du corps de base (5) et de la pièce (6) sur la base des données géométriques et de position, il est possible d'obtenir une pression d'applique uniforme sur les surfaces jointives (51, 61).

9. Dispositif selon l'une des revendications 7 et 8, **caractérisé en ce qu'au** moins un moyen (1) de positionnement d'un élément chauffant (221) est un robot multiaxial.

10. Dispositif selon l'une des revendications 7 à 9, **caractérisé en ce que** le moyen (121) utilisé pour saisir les données géométriques et de position est un scanner 3D à laser.

11. Dispositif selon l'une des revendications 7 à 10, **caractérisé en ce qu'en** plus ont été prévus des moyens pour usiner le corps de base (5), pilotables via l'unité de commande (4) sur la base des données géométriques et de position saisies.

12. Dispositif selon l'une des revendications 7 à 11, **caractérisé en ce que** l'élément chauffant (221) et le moyen (223) de saisie des données géométriques et de position sont combinés dans une unité à actionneur (22*).
